# EUROPEAN PATENT SPECIFICATION

(11) **EP 4 403 413 B1**
(45) Date of publication and mention of the grant of the patent: **05.11.2025**
(21) Application number: 23152473.7
(22) Date of filing: 19.01.2023
(51) Int. Cl.: B60N 2/50

(54) **A SAFETY ARRANGEMENT FOR A HEIGHT-ADJUSTABLE SEAT STRUCTURE AND A VEHICLE SEAT IN A TRUCK, LORRY OR BUS USING SUCH SAFETY ARRANGEMENT**
SICHERHEITSANORDNUNG FÜR EINE HÖHENVERSTELLBARE SITZSTRUKTUR UND FAHRZEUGSITZ IN EINEM LASTKRAFTWAGEN, LASTKRAFTWAGEN ODER BUS MIT SOLCH EINER SICHERHEITSANORDNUNG
AGENCEMENT DE SÉCURITÉ POUR UNE STRUCTURE DE SIÈGE RÉGLABLE EN HAUTEUR ET SIÈGE DE VÉHICULE DANS UN CAMION, UN CAMION OU UN BUS UTILISANT UN TEL AGENCEMENT DE SÉCURITÉ

(43) Date of publication of application: 24.07.2024
(73) Proprietor: Autoliv Development AB, 447 83 Vårgårda (SE)
(72) Inventor: Andersson, Mikael, 447 83 Vårgårda (SE); Sandqvist, Mikael, 447 83 Vårgårda (SE)
(74) Representative: AWA Sweden AB

(56) References cited:
- DE-A1- 102009 017 957
- SE-C2- 528 418

## Description

### Technical field

The present invention refers to a safety arrangement for a height-adjustable seat structure and to a vehicle seat in a truck, lorry or bus using such safety arrangement.

### Technical background

Seats for trucks, lorries and busses should be comfortable to provide an ergonomic and comfortable working environment for the driver/passenger. The seat should by way of example provide a wide range of settings and also provide a good suspension. DE102009017957 A1 discloses a mechanism of a vehicle seat. One well known measure to allow a height adjustment of the vehicle seat is to provide its seat structure with a seat lifting arrangement using a scissors type mechanism. Such seat structure does as such have an inherent weakness with a tendency to deform and bend forward in the event of a frontal crash. One way to reduce and restrict the movement in the event of a frontal crash is to provide the seat with a belt and a belt retractor that restricts the forward motion of the seat structure. Such belt retractor may be of the same type that is used in traditional seat belts. The belt does however typically require a certain slack to allow the seated person to adjust the seat in the vertical direction and in the rearward and forward directions. Such slack is however of danger in the event of a roll-over type accident. In a roll-over type accident, the seat structure and also the body of the seated person that is coupled to the seat, will be subjected to an upward and lateral movement. While the movement of the seat structure can be restricted by the belt and belt retractor, the movement of the body can be restricted by the seatbelt and also by one or more airbags that are configured to be deployed in the opposite directions. However, there is still a risk that especially the head of the seated person comes in contact with the crossbeam of the vehicle cab that extends between the A-pillar and the B-pillar. This is since the body is not fully coupled in that direction by the seatbelt. This is especially the case in the event the seat has been set to a vertically raised position with a shorter vertical distance between the person's head and the crossbeam of the vehicle cab. There is hence a need to provide an improved safety arrangement for a seat that is intended to be used in a truck, lorry or bus, which arrangement is directed to operate in the event of a roll-over type accident.

### Summary

It is an object of the present invention to provide a safety arrangement for a height-adjustable seat structure that is designed to overrule any adjustment in the height direction set by the driver/passenger.

A further object is to provide a safety arrangement that may be released in the event of a determination of a roll-over type accident.

Yet another object is to provide a safety arrangement that is specifically designed for a seat structure in a vehicle seat in a truck, lorry or bus and similar vehicles that uses a scissors-type mechanism.

These and other objects that will be apparent from the following summary and description are achieved by a safety arrangement according to the appended claims.

According to an aspect of the present invention, there is provided a safety arrangement for a height-adjustable seat structure, the seat structure comprising: a first set of legs comprising a first leg pivotably connected to a second leg, and a first pair of guide rails comprising an upper guide rail and a lower guide rail; wherein
the first leg in the first set of legs comprises one end portion being pivotably hinged to the upper guide rail in the first pair of guide rails and the other end portion being linearly movable along the lower guide rail in the first pair of guide rails, and the second leg in the first set of legs comprises one end portion being pivotably hinged to the lower guide rail in the first pair of guide rails and the other end portion being linearly movable along the upper guide rail in the first pair of guide rails; wherein
the height-adjustable seat structure further comprises a first seat actuator comprising a first piston, said first seat actuator being configured to, upon an activation signal communicated from a crash sensor in response to a determined roll-over type accident, move the first piston from a retracted position to an extended position in which it directly or indirectly exerts a force to one of the linearly movable end portions of the first set of legs, thereby forcing the height-adjustable seat structure towards a lowered position.

Accordingly, a safety arrangement is provided that is arranged to interact with a seat structure of the type that uses a scissors-type mechanism to allow the seat structure to be adjustable in height. Such seat structures are as such well known in seats for trucks and lorries. More precisely, the safety arrangement according to the invention comprises seat actuator with a piston that, when set to its extended position, directly or indirectly exerts a force to one of the linearly movable end portions of the first set of legs. The height-adjustable seat structure is thereby forced by the piston towards a lowered position. The body of the seated and coupled person will thereby automatically follow in the downward direction since it by means of the three-point seatbelt is coupled to the vehicle seat. Since the person's body is moved downwardly, her head portion will be prevented from hitting the crossbeam of the vehicle cab that extends between the A-pillar and the B-pillar. Instead, the sideward movement of her head may be accommodated by an airbag that forms part of the vehicle's overall crash protection system and which airbag is configured to be deployed in the downward and sideward direction.

As a result of the scissors-type mechanism, the piston may be configured to act on either of the two linearly movable end portions of the first set of legs to cause the seat structure to lower. The piston may be configured to act directly to the leg by the free end of the piston (or a driver connected thereto) physically engaging the leg, or indirectly, by the free end of the piston (or a driver connected thereto) engaging e.g., a protrusion or a crossbar that is connected to said leg. The activation signal is communicated from a crash sensor in response to a determined roll-over type accident. The activation signal may be communicated to the seat actuator via a processor which forms part of an Electronic Control Unit (ECU) of the vehicle.

The seat structure may further comprise a second set of legs comprising a first leg pivotably connected to a second leg, and a second pair of guide rails comprising an upper and a lower guide rail; wherein the first leg in the second set of legs comprises one end portion being pivotably hinged to the upper guide rail in the second pair of guide rails and the other end portion being linearly movable along the lower guide rail in the second pair of guide rails, and the second leg in the second set of legs comprises one end portion being pivotably hinged to the lower guide rail in the second pair of guide rails and the other end portion being linearly movable along the upper guide rail in the second pair of guide rails.

Although the seat structure in its simplest form may comprise one set of legs only, a more robust seat structure may be provided for by providing two sets of legs. The first and second sets of legs of the seat structure are preferably arranged side by side in a parallel fashion. The first and second sets of legs are preferably identical.

The safety arrangement may further comprise a second seat actuator comprising a second piston, said second seat actuator being configured to, upon an activation signal, move the second piston from a retracted position to an extended position in which it directly or indirectly exerts a force to one of the linearly movable end portions of the first and/or second sets of legs.

Thus, the first and second seat actuators may be arranged to act on the same set of legs or on different sets of legs. The two seat actuators may be fixedly connected to the upper or to the lower guide rail of the first pair of guide rails, to the upper guide rails of the first and second pairs of guide rails, or to the lower guide rails of the first and second pairs of guide rails. The first and second seat actuators should preferably be symmetrically arranged.

The first and second seat actuators may be configured to be activated concurrently by one and the same activation signal.

The first and second sets of legs may be interconnected by at least one crossbar, said at least one crossbar extending perpendicularly to the longitudinal extensions of the guide rails in the first and second pairs of guide rails.

The seat actuator may be fixedly connected to the upper or to the lower guide rail of the first pair of guide rails, or to the upper or to the lower guide rails of the first and second pair of guide rails.

The guide rails may by way of example have a L, or C-shaped cross section. The seat actuator is preferably arranged on an inner wall portion of the guide rail.

The respective piston may be configured to be moved in a direction in parallel with a longitudinal extension of the upper or the lower guide rails of the respective pair of guide rails.

The respective piston may be configured to exert a force to one of the linearly movable end portions of the respective set of legs by directly acting on one of the first and second legs in the respective set of legs, or indirectly by acting on a protrusion or crossbar mounted to one of the first and second legs in the respective set of legs.

The seat structure may further comprise a seat support having a top surface and a bottom surface, wherein the upper guide rail in the respective pair of guide rails is supported by the bottom surface of the seat support.

The respective seat actuator may be fixedly connected to the seat support. The fixation may be made by bolting or welding.

The seat actuator may in one embodiment be arranged along a longitudinal centreline of the seat support, and the piston of said seat actuator may be configured to concurrently, directly or indirectly, exert a force on a linearly movable end portion of the first and second sets of legs.

This may be made by the free end of the piston comprising a driver in the form of a crossbar that has a transverse extension between the first and second legs to thereby allow both sets of legs to be acted on directly and concurrently.

Alternatively, it may be made by the free end of the piston comprising a driver that is configured to act on a crossbar that extends between the two sets of legs, to thereby allow both sets of legs to be acted on indirectly and concurrently.

The piston of the respective seat actuator may be configured to be actuated by a gas pressure generated by a gas generator. The gas generator may be a pyrotechnic gas generator.

The seat actuator may be dimensioned to apply a force to the seat structure that has a vertical force component that exceeds a vertical force component applied by any seat lifting arrangement integrated in the seat structure. Such seat lifting arrangement is typically part of a comfort arrangement of a seat structure to allow the seated person to adjust the height and the suspension of the seat structure. Such seat lifting arrangement may by way of example be a gas spring that interacts with the one or two sets of legs of the seat structure. The dimensioned force of the seat actuator should exceed the vertical force applied by any seat lifting arrangement integrated in the seat structure to thereby overrule the same and force the seat structure to a lowered position in the event of a determined accident of the roll-over type.

A free end of the respective piston may comprise a driver, said driver having a C- or V-shape. By a C- or V-shape, the driver will facilitate engagement with the leg portion or any protrusion or crossbar extending from the guide rail and also accommodate any deformations of the seat structure.

According to another aspect, the invention refers to a vehicle seat in a truck, bus or lorry, characterized in that it is provided with a safety arrangement according to any of claims 1-13. The features and advantages of such safety arrangement have been discussed above. These are equally applicable to a vehicle seat using such safety arrangement, and to avoid undue repetition, reference is made to the sections above.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses one embodiment of a vehicle seat with a height-adjustable seat structure using a scissors-type mechanism.
Fig. 2 schematically discloses how the legs of the scissors-type mechanism are moved during a lowering of the seat structure.
Fig. 3 discloses a vehicle seat with a first embodiment of the safety arrangement according to the invention.
Figs. 4A and 4B schematically disclose the operation of the safety arrangement according to the first embodiment of the invention.
Fig. 5 discloses a vehicle seat with a second embodiment of the safety arrangement according to the invention.
Figs. 6A and 6B schematically disclose the operation of the safety arrangement according to the second embodiment of the invention.
Figs. 7A and 7B schematically disclose the operation of the safety arrangement according to a third embodiment of the invention.
Figs. 8A-8E disclose highly schematically different embodiments using two or more seat actuators as applied to a seat structure.
Fig. 9 disclose highly schematically one alternative to a centrally arranged seat actuator.

### Detailed description

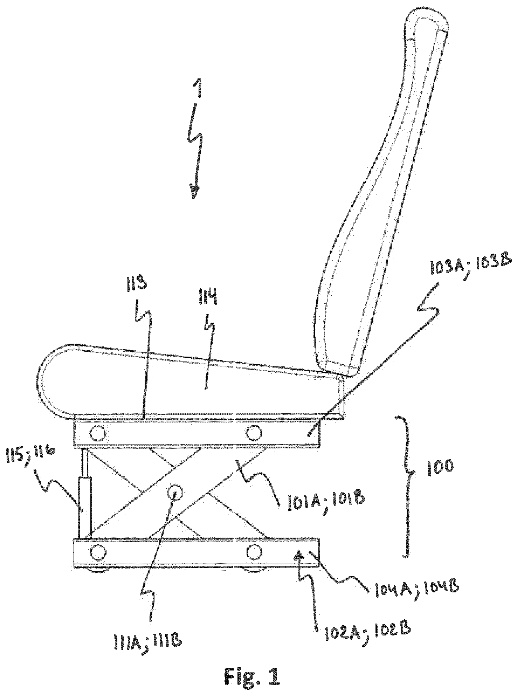

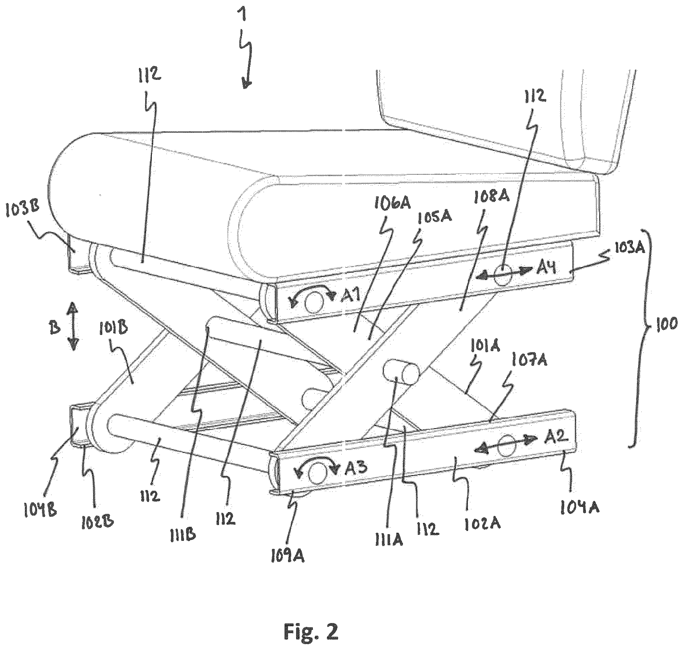

Now turning to Figs. 1 and 2, one example of a vehicle seat 1 is disclosed. The vehicle seat 1 is of the type that is typically used in a truck, lorry or bus. The vehicle seat 1 comprises a height-adjustable seat structure 100 using a scissors-type mechanism. The disclosed seat structure 100 comprises a first set of legs 101A and a second set of legs 101B that are pivotably interconnected by a crossbar 112. The two sets of legs are arranged in parallel, whereby only one is disclosed in the disclosed view.

The crossbar 112 brings stability but also serves as a pivot 111A, 111B in view of the legs in each set of legs 101A, 101B. Although the seat structure 100 in its simplest form may comprise one set of legs only, a more robust seat structure may be provided for by providing two sets of legs. The first and second sets of legs 101A, 101B are preferably arranged side by side in a parallel fashion.

Further, the disclosed seat structure 100 comprises a first pair or guide rails 102A and a second pair or guide rails 102B. The two pairs of guide rails are arranged in parallel., whereby only one is disclosed in the disclosed view.

Each pair of guide rails 102A, 102B comprises an upper guide rail 103A, 103B and a lower guide rail 104A, 104B. The skilled person realizes that in the event of only one set of legs, only one pair of guide rails is required.

The two sets of legs 101A, 101B, and also the two pair of guide rails 102A, 102B are preferably identical. Unless specifically stated otherwise, only the first set of legs 101A and the first pair of guide rails 102A are discussed below with reference to Fig. 2.

Turning to Fig. 2. A first leg 105A in the first set of legs 101A comprises one end portion 106A that is pivotably hinged to the upper guide rail 103A in the first pair of guide rails 102A, see arrow A1. The other end portion 107A of the first leg 105A is linearly movable along the lower guide rail 104A in the first pair of guide rails 102A, see arrow A2.

Correspondingly, a second leg 108A in the first set of legs 101A comprises one end portion 109A that is pivotably hinged to the lower guide rail 104A in the first pair of guide rails 102A, see arrow A3. The other end portion 110A is linearly movable along the upper guide rail 103A in the first pair of guide rails 102A, see arrow A4. By this arrangement, the first set of legs 101A operates like a scissors-type mechanism that allows the height of the seat structure 100 to be adjustable, see arrow B, by each leg 105A, 108A pivoting in view or its respective guide rail 103A, 104A and also by the two legs 105A, 108A pivoting in view of each other around the pivot 111A.

The guide rails 103A, 104A may by way of example have a C-shaped or L-shaped cross section. It is to be realised that also other cross sections are applicable.

The lower guide rails 104A, 104B may be fixedly mounted directly to a floor (not disclosed) of the vehicle cab. They can also be fixed to a structure (not disclosed) which in turn is configured to be fixedly mounted to the floor of the cab.

The end portions 107A, 110A of the legs that are linearly movable along a respective guide rail 103A, 104A may be provided with an optional sliding member such as a wheel (not illustrated) that provides a low-frictional support relative to the guide rail. As an alternative to a wheel, a free end of the respective leg may be provided with a rounded end profile, a protective sheet or a protective plug. The sheet or plug may be formed by a low-friction material.

The first and second sets of legs 101A, 101B are interconnected by at least one crossbar 112. In the disclosed embodiment, five cross bars 112 are disclosed. The crossbars 112 extend perpendicularly to the longitudinal extensions of the guide rails 103A, 103B, 104A, 104B in the first and second pairs of guide rails 102A, 102B.

The seat structure 100 may further comprise, best seen in Fig. 1, a seat support 113. The seat support 113 has a top surface and a bottom surface. The top surface supports a seat cushion 114. The upper guide rails 103A, 103B in the respective pair of guide rails 102A, 102B is supported by the bottom surface of the seat support 113. The upper guide rails 103A, 103B may be mounted by e.g. bolting or welding to the seat support 113.

The seat structure 100 further comprises a seat lifting arrangement 115. The seat lifting arrangement 115 is disclosed highly schematically. The seat lifting arrangement 115, which as such is well known in the art, is typically part of a comfort arrangement of the seat structure 100 to allow the height and the suspension of the seat structure 100 to be adjusted. The seat lifting arrangement 115 may by way of example be a gas spring 116 that cooperates with the guide rails of the seat structure 100. The position and structural design of the seat lifting arrangement 115 may differ between different seat suppliers and vehicles.

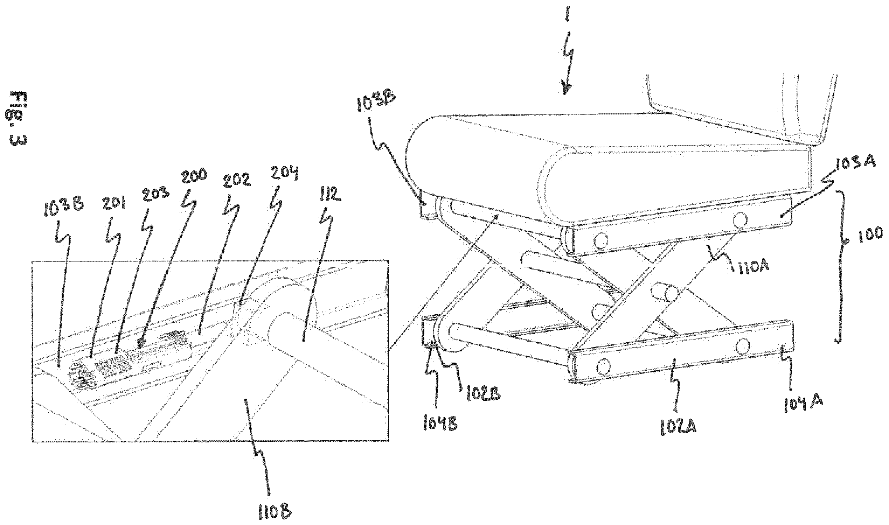

Now turning to Fig. 3, a first embodiment of the safety arrangement according to the invention is disclosed as mounted to a seat structure 100 of a vehicle seat 1.

The safety arrangement comprises a seat actuator 200. The seat actuator 200 is disclosed as being fixedly connected by a bracket 201 to an inner wall portion of one of the two upper guide rails 103B. By arranging the seat actuator on the inner wall portion and hence on the lower side of the vehicle seat 1, the seat actuator 200 will be protected from any external impact and/or interference. The fixation, no matter position, may be made by bolting or welding.

It is to be stressed that a second seat actuator optionally may be arranged in the corresponding position on the inner wall of the other 103A of the two parallel upper guide rails. In the following, only one of the two actuators will be discussed since the design and operation principle is the same.

The seat actuator 200 comprises a piston 202. The piston 202 is arranged in a housing 203 which forms a cylinder chamber. The cylinder chamber serves as a guide for the piston 202 during actuation thereof. The piston 202 is in Fig. 3 disclosed in its retracted position, i.e., its normal position. As will be discussed below, the piston 202 is configured, upon activation of the seat actuator 200 to be longitudinally displaced into its extended position. The activation is triggered by an activation signal from a crash sensor (not disclosed) that indicates an accident of a roll-over type.

The piston 202 is in its easiest form provided as a rod. The piston 202 may in some embodiments may be telescopic. The piston 202 may be configured to be actuated by a gas pressure generated by a gas generator (not illustrated) in the seat actuator 200. The gas generator may be a pyrotechnic gas generator. This is well known in the art and is not further discussed.

The housing 203 of the seat actuator 200 may have a venting arrangement (not illustrated) that allows generated gas to be vented from the housing 203. This kind of venting is well known in the art and is not further discussed.

The free end of the piston 202 comprises an optional driver 204. The driver 204 may have a C- or V-shape. The driver 204 is disclosed as being configured to engage a protruding portion of the crossbar 112 that pivotably interconnects the upper linearly movable end portions 110A, 110B of the two legs 105A, 105B. The skilled person realizes that the driver may be omitted. Instead, the free end of the piston 202 may be configured to directly act on the corresponding linearly movable leg portion.

The piston 202 is preferably configured to be moved in a direction in parallel with a longitudinal extension of the guide rails 104A, 104B; 103A, 103B in the at least one pair of guide rails 102A, 102B.

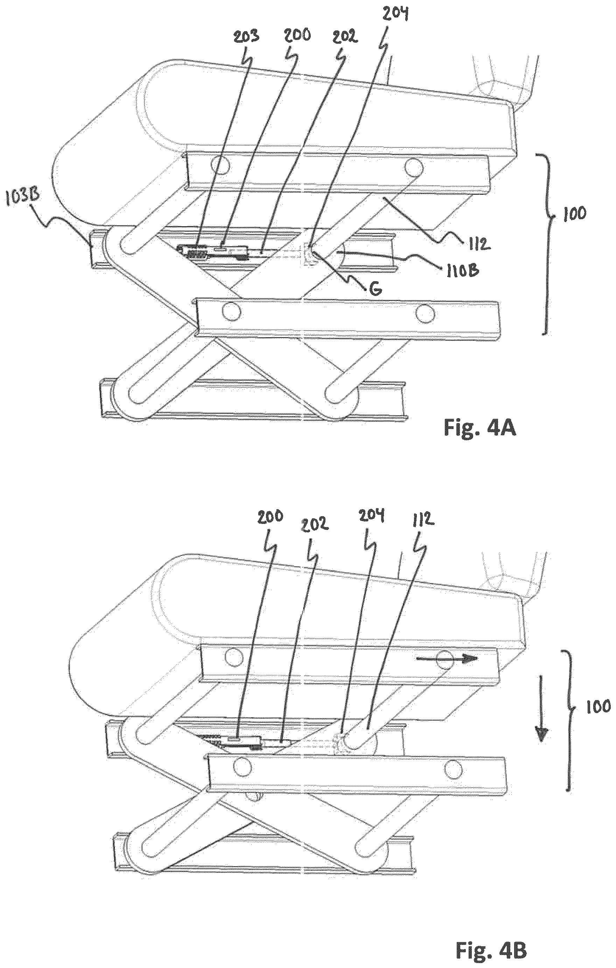

Now turning to Figs. 4A and 4B, the operation of the safety arrangement according to the first embodiment will be discussed.

Starting with Fig. 4A, the seat actuator 200 is disclosed in its ordinary use with the seat actuator 200 fixedly supported to an inner wall of one of the upper guide rails 103B of the seat structure 100. Also, the piston 202 is in its retracted position. It is preferred that the seat actuator 200 is mounted so that there is a gap G between the driver 204 of the piston 202 and the linearly movable end portion of the leg or the crossbar 112 to be acted upon as seen in position when the seat structure 100 is set to its higher-most position that is allowed when using the seat lifting arrangement. Thereby there is no risk that the driver 204 or the free end of the piston is 202 accidentally forced into engagement with the leg/crossbar during ordinary use of the vehicle seat, such as in the event of a bumpy road.
As a crash sensor (not disclosed) in the vehicle determines a roll-over type accident, an activation signal is communicated from the crash sensor to the seat actuator 200 via a processor (not disclosed) which forms part of an Electronic Control Unit (ECU) of the vehicle. The gas generator is activated, whereby a gas pressure is built up inside the housing 203 of the seat actuator 200. The gas pressure forces the piston 202 to move from its retracted position to its extended position, see Fig. 4B. In the event the safety arrangement comprises two seat actuators, these may be configured to be activated concurrently by one and the same activation signal.

As the piston 202 is moved from its retracted position to its extended position, the driver 204 on the free end of the piston 202 comes in contact with, depending on the design, either the crossbar 112 or the linearly movable end portion 110B of the leg. Depending on the design of the end portion 110B of the leg, the driver 204 may engage the end portion directly or a protrusion or crossbar that extends from or through the linearly movable end portion of the leg. The piston 202 thereby exerts a linear force to the upper linearly movable end portion 110B of the leg. The height-adjustable seat structure 100 is thereby forced towards its lowered position, see Fig. 4B. The lowering of the seat structure 100 is a result of the scissors-type mechanism of the seat structure. The movements of the seat structure 100 are illustrated by the arrows in Fig. 4A.

The body of a seated and coupled person will automatically follow in the downward direction since it by means of a three-point seatbelt is coupled to the vehicle seat. Since the person's body is moved downwardly, her head portion will be prevented from hitting a crossbeam structure of the vehicle cab that extends between the A-pillar and the B-pillar. Instead, the sideward movement of her head may be accommodated by an airbag that forms part of the vehicle's overall crash protection system and which airbag is configured to be deployed in the downward and side ward direction.

The seat actuator 200 is dimensioned to apply a force to the seat structure 100 that has a vertical force component that exceeds a vertical force component applied by any seat lifting arrangement integrated in the seat structure 100. The seat lifting arrangement is omitted in Figs. 3 and 4A-4B. A seat lifting arrangement 115, see Fig. 1, is typically part of a comfort arrangement of a seat structure 100 to allow the seated person to adjust the height and the suspension of the seat structure 100. Such seat lifting arrangement may by way of example be a gas spring that interacts with the one or two sets of legs of the seat structure 100. By dimensioning the vertical force component of the impact force applied by the seat actuator 200 to exceed the vertical force component applied by any seat lifting arrangement, the latter will be overruled and the seat structure 100 will be forced to its lowered position and hence the position disclosed in Fig. 4B.

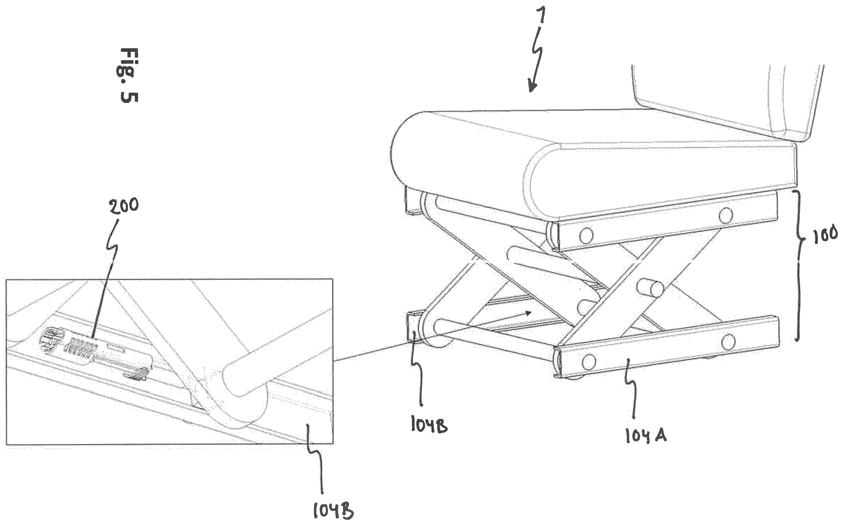

Now turning to Fig. 5, a second embodiment of the safety arrangement according to the invention is disclosed as mounted to a seat structure 100 of a vehicle seat 1.

The second embodiment differs from the first embodiment in that the seat actuator 200 is fixed to an inner wall portion of a lower guide rail 104B.

It is to be stressed that a second seat actuator 200 optionally may be arranged in the corresponding position on the inner wall of the other 104A of the two parallel lower guide rails 104A, 104B. In the following, only one of the two actuators will be discussed sine the design and operation principle is the same.

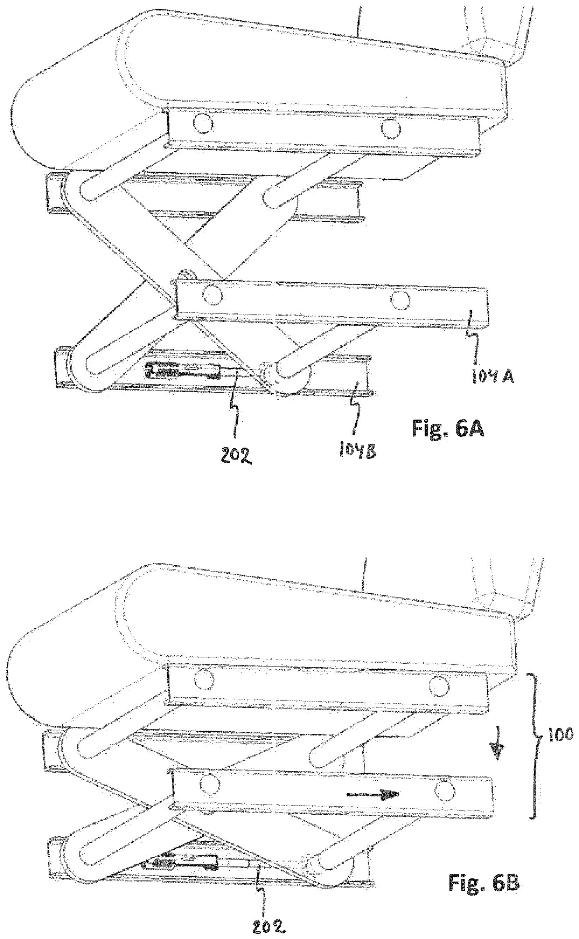

The operation principle of the second embodiment is disclosed in Figs. 6A and 6B. Fig. 6A discloses the safety arrangement in its ordinary use with the piston 202 in its retracted position and the seat structure being set to a raised position. Fig. 6B discloses the safety arrangement in its activated position where the piston 202 has been set to its extended position and where the piston of the seat activator has forced the seat structure 100 to its lowered position. The movements of the seat structure 100 are illustrated by the arrows. The operation principle is the same as that discussed above with reference to Figs. 3 and 4A-4B. Reference is made to the discussions above to avoid undue repetition.

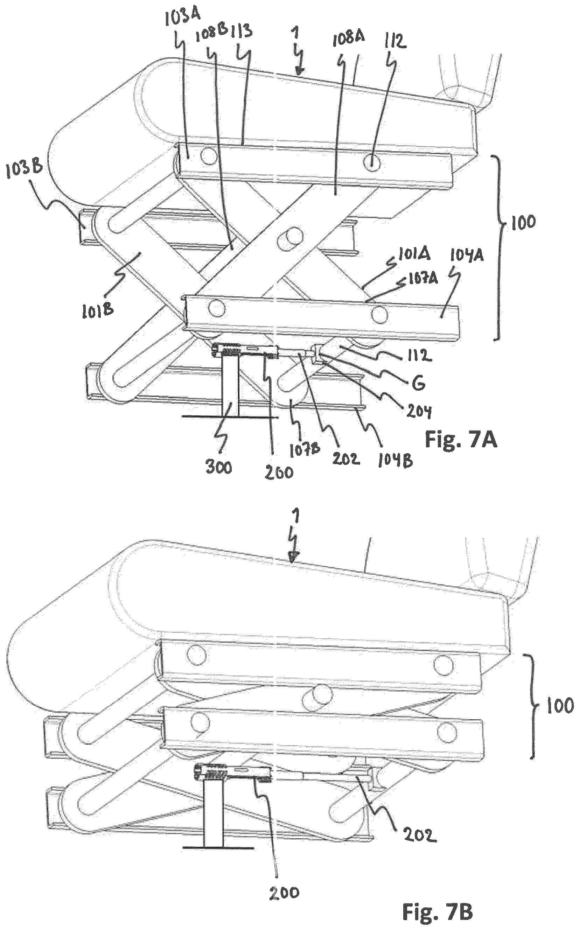

Now turning to Figs. 7a and 7B, a third embodiment of the safety arrangement according to the invention is disclosed as mounted to a seat structure 100 of a vehicle seat 1. The third embodiment differs from the first and second embodiment in that the seat actuator 200 is fixed to a support structure 300 that is fixedly mounted, directly or indirectly to a floor of the vehicle cab. The overall design of the seat structure 100 and the vehicle seat 1 is the same as described above with reference to Figs. 1 and 2.

The seat actuator 200 is in this embodiment arranged along a longitudinal centreline of the seat support. The piston 202 of said seat actuator 200 is configured to concurrently and indirectly exert a force on the linearly movable end portions of the first and second sets of legs 101A, 101B. This is made by the free end of the piston 202 comprising a driver 204 that is configured to act on a central position of the crossbar 112 that extends between the two sets of legs 101A, 101B. Thereby both sets of legs may be acted on concurrently to thereby lower the seat structure 100.

The seat actuator 200 is disclosed as being arranged to act on the crossbar 112 that extends between the two linearly movable end portions 107A, 107B that are supported by the two lower guide rails 104A, 104B. The skilled person realises that the same principle is equally applicable by instead arranging the seat actuator to be supported by the bottom surface of the seat structure 113 and arrange the piston to act on the upper crossbar that extends between the two linearly movable end portions 108A, 108B that are supported by the two upper guide rails 103A, 103B.

Like in the first and second embodiment, the free end of the piston 202 comprises an optional driver 204 having a C-shape.

Fig. 7A discloses the safety arrangement in its ordinary use with the piston 202 in its retracted position and the seat structure 100 being set to a raised position. It is preferred that the seat actuator 200 is mounted so that there is a gap G between the driver 204 of the piston 202 and the crossbar 112 to be acted upon as seen in position when the seat structure 100 is set to its higher-most position that is allowed when using the seat lifting arrangement. Thereby there is no risk that the driver 204 of the piston 202 is accidentally forced into engagement with the crossbar 112 during ordinary use of the vehicle seat, such as in the event of a bumpy road.

Fig. 7B discloses the safety arrangement in its activated position where the piston 202 has been set to its extended position and where the piston 202 of the seat activator 200 has forced the seat structure 100 to its lowered position. The operation principle is the same as that discussed above with reference to Figs. 3 and 4A-4B and is not further discussed to avoid undue repetition.

The number of seat actuators may vary. In its easiest form it is sufficient with one single seat actuator as have been exemplified above with reference to the first to third embodiments. It has been exemplified that such single seat actuator may be fixedly connected to either the upper or the lower guide rail in one of the pair of guide rails. In the event of two or more seat actuators, these are preferably symmetrically arranged. In the event the safety arrangement comprises two or more seat actuators, these may be configured to be activated concurrently by one and the same activation signal.

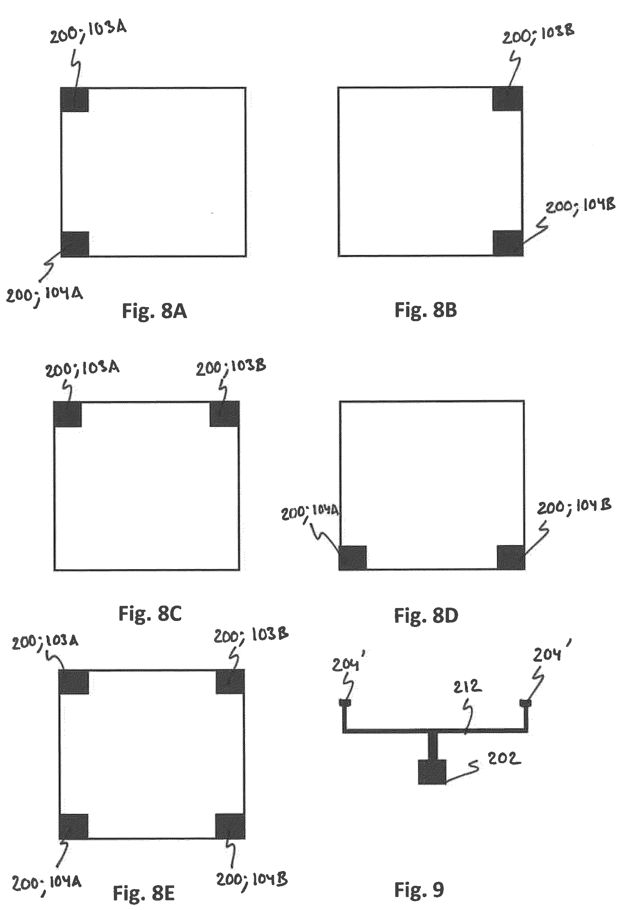

Fig. 8A discloses one embodiment with two seat actuators 200 in the upper and lower guiderails 103A, 104A in the first pair of guide rails.

Fig. 8B discloses one embodiment with two seat actuators 200 in the upper and lower guiderails 103B, 14B in the second pair of guide rails.

Fig. 8C discloses one embodiment with two seat actuators 200 in the two upper guiderails 103A, 103B.

Fig. 8D discloses one embodiment with two seat actuators 200 in the two lower guiderails 104A, 104B.

Fig. 8E discloses one embodiment with four seat actuators 200, one in each guiderail 103A, 103B, 104A, 104B.

Now turning to Fig. 9. The skilled person realises that the same principle as in the third embodiment may be provided for by providing the free end of such centralized piston 202 with a T-shaped crossbar 212 with drivers 204' in its free ends. The T-shaped crossbar 212 has a transverse extension configured to extend between the first and second legs in the first and second sets of legs to thereby allow both sets of legs to be acted on directly and concurrently.

The seat structure has been disclosed with the seat structure and the seat actuator being oriented so that the linearly movable end portions of the legs are arranged to be moved in the rearward position to lower the seat structure. The skilled person realises that the seat structure and its seat actuator with remained function may be oriented in the opposite direction to instead be configured to be operated in the forward direction to lower the seat structure.

The safety arrangement may be combined with any additional separate restraint system (not illustrated). The systems may be configured to be activated simultaneously.

## Claims

1. A safety arrangement for a height-adjustable seat structure, the seat structure comprising: a first set of legs comprising a first leg pivotably connected to a second leg, and a first pair of guide rails comprising an upper guide rail and a lower guide rail; wherein
the first leg in the first set of legs comprises one end portion being pivotably hinged to the upper guide rail in the first pair of guide rails and the other end portion being linearly movable along the lower guide rail in the first pair of guide rails, and the second leg in the first set of legs comprises one end portion being pivotably hinged to the lower guide rail in the first pair of guide rails and the other end portion being linearly movable along the upper guide rail in the first pair of guide rails; wherein
the height-adjustable seat structure further comprises a first seat actuator comprising a first piston, **characterized in that:**
said first seat actuator being configured to, upon an activation signal communicated from a crash sensor in response to a determined roll-over type accident, move the first piston from a retracted position to an extended position in which it directly or indirectly exerts a force to one of the linearly movable end portions of the first set of legs, thereby forcing the height-adjustable seat structure towards a lowered position.

2. The safety arrangement according to claim 1, wherein the seat structure further comprises a second set of legs comprising a first leg pivotably connected to a second leg, and a second pair of guide rails comprising an upper guide rail and a lower guide rail; wherein
the first leg in the second set of legs comprises one end portion being pivotably hinged to the upper guide rail in the second pair of guide rails and the other end portion being linearly movable along the lower guide rail in the second pair of guide rails, and the second leg in the second set of legs comprises one end portion being pivotably hinged to the lower guide rail in the second pair of guide rails and the other end portion being linearly movable along the upper guide rail in the second pair of guide rails.

3. The safety arrangement of claim 1 or 2, wherein the safety arrangement further comprises a second seat actuator comprising a second piston, said second seat actuator being configured to, upon an activation signal, move the second piston from a retracted position to an extended position in which it directly or indirectly exerts a force to one of the linearly movable end portions of the of the first and/or second sets of legs.

4. The safety arrangement according to claim 3, wherein the first and second seat actuators are configured to be activated concurrently by one and the same activation signal.

5. The safety arrangement according to claim 3, wherein the first and second sets of legs are interconnected by at least one crossbar, said at least one crossbar extending perpendicularly to the longitudinal extensions of the guide rails in the first and second pair of guide rails.

6. The safety arrangement according to claim 1 or 2, wherein the seat actuator is fixedly connected to the upper or to the lower guide rail of the first pair of guide rails or to the upper or to the lower guide rails of the first and second pairs of guide rails.

7. The safety arrangement according to claim 1 or 3, wherein the respective piston is configured to be moved in a direction in parallel with a longitudinal extension of the upper or the lower guide rails of the respective pair of guide rails.

8. The safety arrangement according to claim 1 or 3, wherein the respective piston is configured to exert a force to one of the linearly movable end portions of the respective set of legs by directly acting on one of the first and second legs in the respective set of legs, or indirectly by acting on a protrusion or crossbar mounted to one of the first and second legs in the respective set of legs.

9. The safety arrangement according to claim 1, wherein the seat structure further comprises a seat support having a top surface and a bottom surface, wherein the upper guide rail in the respective pair of guide rails is supported by the bottom surface of the seat support.

10. The safety arrangement according to claim 9, wherein a seat actuator is arranged along a longitudinal centreline of the seat support, and wherein the piston of said seat actuator is configured to concurrently, directly or indirectly, exert a force on a linearly movable end portion of the first and second sets of legs.

11. The safety arrangement according to claim 1 or 3,
wherein the piston of the respective seat actuator is configured to be actuated by a gas pressure generated by a gas generator.

12. The safety arrangement according to claim 1, wherein the seat actuator is dimensioned to apply a force to the seat structure that has a vertical force component that exceeds a vertical force component applied by any seat lifting arrangement integrated in the seat structure.

13. The safety arrangement according to claim 1, wherein a free
end of the respective piston comprises a driver, said driver having a C- or V-shape.

14. A vehicle seat in a truck, bus or lorry, said vehicle seat being provided with a safety arrangement according to claim 1.

## Patentansprüche

1. Sicherheitsanordnung für eine höhenverstellbare Sitzstruktur, die Sitzstruktur umfassend: einen ersten Satz von Schenkeln, umfassend einen ersten Schenkel, der mit einem zweiten Schenkel schwenkbar verbunden ist, und ein erstes Paar von Führungsschienen, umfassend eine obere Führungsschiene und eine untere Führungsschiene; wobei
der erste Schenkel in dem ersten Satz von Schenkeln einen Endabschnitt, der an der oberen Führungsschiene in dem ersten Paar von Führungsschienen schwenkbar gelenkig angebracht ist, umfasst und der andere Endabschnitt entlang der unteren Führungsschiene in dem ersten Paar von Führungsschienen linear beweglich ist und der zweite Schenkel in dem ersten Satz von Schenkeln einen Endabschnitt, der an der unteren Führungsschiene in dem ersten Paar von Führungsschienen schwenkbar gelenkig angebracht ist, umfasst und der andere Endabschnitt entlang der oberen Führungsschiene in dem ersten Paar von Führungsschienen linear beweglich ist; wobei
die höhenverstellbare Sitzstruktur ferner einen ersten Sitzaktuator umfasst, umfassend einen ersten Kolben, **dadurch gekennzeichnet, dass:**
der erste Sitzaktuator konfiguriert ist, um, auf ein Aktivierungssignal hin, das von einem Aufprallsensor als Reaktion auf einen bestimmten überschlagartigen Unfall kommuniziert wird, den ersten Kolben von einer eingefahrenen Position in eine ausgefahrene Position zu bewegen, in der er eine Kraft auf einen der linear beweglichen Endabschnitte des ersten Satzes von Schenkeln direkt oder indirekt ausübt, wobei dadurch die höhenverstellbare Sitzstruktur in Richtung einer abgesenkten Position gezwungen wird.

2. Sicherheitsanordnung nach Anspruch 1, wobei die Sitzstruktur ferner einen zweiten Satz von Schenkeln, umfassend einen ersten Schenkel, der mit einem zweiten Schenkel schwenkbar verbunden ist, und ein zweites Paar von Führungsschienen, umfassend eine obere Führungsschiene und eine untere Führungsschiene, umfasst; wobei
der erste Schenkel in dem zweiten Satz von Schenkeln einen Endabschnitt, der an der oberen Führungsschiene in dem zweiten Paar von Führungsschienen schwenkbar gelenkig angebracht ist, umfasst und der andere Endabschnitt entlang der unteren Führungsschiene in dem zweiten Paar von Führungsschienen linear beweglich ist und der zweite Schenkel in dem zweiten Satz von Schenkeln einen Endabschnitt, der an der unteren Führungsschiene in dem zweiten Paar von Führungsschienen schwenkbar gelenkig angebracht ist, umfasst und der andere Endabschnitt entlang der oberen Führungsschiene in dem zweiten Paar von Führungsschienen linear beweglich ist.

3. Sicherheitsanordnung nach Anspruch 1 oder 2, wobei die Sicherheitsanordnung ferner einen zweiten Sitzaktuator, umfassend einen zweiten Kolben, umfasst, wobei der zweite Sitzaktuator konfiguriert ist, um, auf ein Aktivierungssignal hin, den zweiten Kolben von einer eingefahrenen Position in eine ausgefahrene Position zu bewegen, in der er eine Kraft auf einen der linear beweglichen Endabschnitte des ersten und/oder des zweiten Satzes von Schenkeln direkt oder indirekt ausübt.

4. Sicherheitsanordnung nach Anspruch 3, wobei der erste und der zweite Sitzaktuator konfiguriert sind, um gleichzeitig durch ein und dasselbe Aktivierungssignal aktiviert zu werden.

5. Sicherheitsanordnung nach Anspruch 3, wobei der erste und der zweite Satz von Schenkeln durch mindestens eine Querstange miteinander verbunden sind, wobei sich die mindestens eine Querstange senkrecht zu den Längserstreckungen der Führungsschienen in dem ersten und dem zweiten Paar von Führungsschienen erstreckt.

6. Sicherheitsanordnung nach Anspruch 1 oder 2, wobei der Sitzaktuator mit der oberen oder mit der unteren Führungsschiene des ersten Paars von Führungsschienen oder mit der oberen oder mit der unteren Führungsschiene des ersten und des zweiten Paars von Führungsschienen fest verbunden ist.

7. Sicherheitsanordnung nach Anspruch 1 oder 3, wobei der jeweilige Kolben konfiguriert ist, um in einer Richtung parallel zu einer Längserstreckung der oberen oder der unteren Führungsschiene des jeweiligen Paars von Führungsschienen bewegt zu werden.

8. Sicherheitsanordnung nach Anspruch 1 oder 3, wobei der jeweilige Kolben konfiguriert ist, um eine Kraft auf einen der linear beweglichen Endabschnitte des jeweiligen Satzes von Schenkeln durch direktes Einwirken auf einen des ersten und des zweiten Schenkels in dem jeweiligen Satz von Schenkeln oder indirekt durch Einwirken auf einen Vorsprung oder eine Querstange, die an einem des ersten und des zweiten Schenkels in dem jeweiligen Satz von Schenkeln montiert ist, auszuüben.

9. Sicherheitsanordnung nach Anspruch 1, wobei die Sitzstruktur ferner eine Sitzstütze, die eine oberste Oberfläche und eine unterste Oberfläche aufweist, umfasst, wobei die obere Führungsschiene des jeweiligen Paars von Führungsschienen durch die unterste Oberfläche der Sitzstütze gestützt wird.

10. Sicherheitsanordnung nach Anspruch 9, wobei ein Sitzaktuator entlang einer Längsmittellinie der Sitzstütze angeordnet ist und wobei der Kolben des Sitzaktuators konfiguriert ist, um gleichzeitig, direkt oder indirekt, eine Kraft auf einen linear beweglichen Endabschnitt des ersten und des zweiten Satzes von Schenkeln auszuüben.

11. Sicherheitsanordnung nach Anspruch 1 oder 3,
wobei der Kolben des jeweiligen Sitzaktuators konfiguriert ist, um durch einen Gasdruck, der durch einen Gasgenerator generiert wird, betätigt zu werden.

12. Sicherheitsanordnung nach Anspruch 1, wobei der Sitzaktuator bemessen ist, um eine Kraft auf die Sitzstruktur aufzubringen, die eine vertikale Kraftkomponente aufweist, die eine vertikale Kraftkomponente überschreitet, die durch eine beliebige Sitzhebeanordnung, die in die Sitzstruktur integriert ist, aufgebracht wird.

13. Sicherheitsanordnung nach Anspruch 1, wobei ein freies Ende des jeweiligen Kolbens einen Mitnehmer umfasst, wobei der Mitnehmer eine C- oder V-Form aufweist.

14. Fahrzeugsitz in einem Truck, Bus oder Lastkraftwagen, wobei der Fahrzeugsitz mit einer Sicherheitsanordnung nach Anspruch 1 versehen ist.

## Revendications

1. Agencement de sécurité destiné à une structure de siège réglable en hauteur, la structure de siège comprenant : un premier ensemble de pieds comprenant un premier pied relié de manière pivotante à un second pied, et une première paire de rails de guidage comprenant un rail de guidage supérieur et un rail de guidage inférieur ; dans lequel
le premier pied dans le premier ensemble de pieds comprend une partie d'extrémité étant articulée de façon pivotante au rail de guidage supérieur dans la première paire de rails de guidage et l'autre partie d'extrémité étant déplaçable linéairement le long du rail de guidage inférieur dans la première paire de rails de guidage, et le second pied dans le premier ensemble de pieds comprend une partie d'extrémité étant articulée de façon pivotante au rail de guidage inférieur dans la première paire de rails de guidage et l'autre partie d'extrémité étant déplaçable linéairement le long du rail de guidage supérieur dans la première paire de rails de guidage ; dans lequel
la structure de siège réglable en hauteur comprend en outre un premier actionneur de siège comprenant un premier piston, **caractérisé en ce que :**
ledit premier actionneur de siège est conçu, lors d'un signal d'activation communiqué par un capteur de collision en réponse à un accident déterminé de type retournement, déplacer le premier piston d'une position rétractée à une position étendue dans laquelle il exerce directement ou indirectement une force sur l'une des parties d'extrémité déplaçables linéairement du premier ensemble de pieds, forçant de ce fait la structure de siège réglable en hauteur en direction d'une position abaissée.

2. Agencement de sécurité selon la revendication 1, dans lequel la structure de siège comprend en outre un second ensemble de pieds comprenant un premier pied relié de façon pivotante à un second pied, et une seconde paire de rails de guidage comprenant un rail de guidage supérieur et un rail de guidage inférieur ; dans lequel
le premier pied dans le second ensemble de pieds comprend une partie d'extrémité étant articulée de façon pivotante au rail de guidage supérieur dans la seconde paire de rails de guidage et l'autre partie d'extrémité étant déplaçable linéairement le long du rail de guidage inférieur dans la seconde paire de rails de guidage, et le second pied dans le second ensemble de pieds comprend une partie d'extrémité étant articulée de façon pivotante au rail de guidage inférieur dans la seconde paire de rails de guidage et l'autre partie d'extrémité étant déplaçable linéairement le long du rail de guidage supérieur dans la seconde paire de rails de guidage.

3. Agencement de sécurité selon la revendication 1 ou 2, dans lequel l'agencement de sécurité comprend en outre un second actionneur de siège comprenant un second piston, ledit second actionneur de siège étant conçu, lors d'un signal d'activation, pour déplacer le second piston d'une position rétractée à une position étendue dans laquelle il exerce directement ou indirectement une force sur l'une des parties d'extrémité déplaçables linéairement des premier et/ou second ensembles de pieds.

4. Agencement de sécurité selon la revendication 3, dans lequel les premier et second actionneurs de siège sont conçus pour être activés simultanément par un seul et même signal d'activation.

5. Agencement de sécurité selon la revendication 3, dans lequel les premier et second ensembles de pieds sont reliés mutuellement par au moins une barre transversale, ladite au moins une barre transversale s'étendant perpendiculairement aux extensions longitudinales des rails de guidage dans les première et seconde paires de rails de guidage.

6. Agencement de sécurité selon la revendication 1 ou 2, dans lequel l'actionneur de siège est relié fixement au rail de guidage supérieur ou inférieur de la première paire de rails de guidage ou aux rails de guidage supérieur ou inférieur des première et seconde paires de rails de guidage.

7. Agencement de sécurité selon la revendication 1 ou 3, dans lequel le piston respectif est conçu pour être déplacé dans une direction en parallèle avec une extension longitudinale des rails de guidage supérieur ou inférieur de la paire respective de rails de guidage.

8. Agencement de sécurité selon la revendication 1 ou 3, dans lequel le piston respectif est conçu pour exercer une force sur l'une des parties d'extrémité déplaçables linéairement de l'ensemble respectif de pieds en agissant directement sur l'un des premier et second pieds dans l'ensemble respectif de pieds, ou indirectement en agissant sur une partie saillante ou barre transversale montée sur l'un des premier et second pieds dans l'ensemble respectif de pieds.

9. Agencement de sécurité selon la revendication 1, dans lequel la structure de siège comprend en outre un support de siège ayant une surface supérieure et une surface inférieure, dans lequel le rail de guidage supérieur dans la paire respective de rails de guidage est supporté par la surface inférieure du support de siège.

10. Agencement de sécurité selon la revendication 9, dans lequel un actionneur de siège est agencé le long d'une ligne médiane longitudinale du support de siège, et dans lequel le piston dudit actionneur de siège est conçu pour exercer simultanément, directement ou indirectement, une force sur une partie d'extrémité déplaçable linéairement des premier et second ensembles de pieds.

11. Agencement de sécurité selon la revendication 1 ou 3,
dans lequel le piston de l'actionneur de siège respectif est conçu pour être actionné par une pression de gaz générée par un générateur de gaz.

12. Agencement de sécurité selon la revendication 1, dans lequel l'actionneur de siège est dimensionné pour appliquer une force à la structure de siège qui a une composante de force verticale qui dépasse une composante de force verticale appliquée par l'un quelconque agencement de levage de siège intégré dans la structure de siège.

13. Agencement de sécurité selon la revendication 1, dans lequel une extrémité libre du piston respectif comprend un poussoir, ledit poussoir ayant une forme de C ou de V.

14. Siège de véhicule dans un camion, un bus ou un poids lourd, ledit siège de véhicule étant pourvu d'un agencement de sécurité selon la revendication 1.
